(19) Europäisches Patentamt
European Patent Office
Office européen des brevets

(11) EP 3 468 162 B1

(12) **EUROPEAN PATENT SPECIFICATION**

(45) Date of publication and mention of the grant of the patent:
**14.10.2020 Bulletin 2020/42**

(21) Application number: **17802138.2**

(22) Date of filing: **23.05.2017**

(51) Int Cl.:
***H04M 9/08*** *(2006.01)*

(86) International application number:
**PCT/CN2017/085467**

(87) International publication number:
**WO 2017/202292 (30.11.2017 Gazette 2017/48)**

(54) **METHOD AND DEVICE FOR TRACKING ECHO DELAY**

VERFAHREN UND VORRICHTUNG ZUR VERFOLGUNG VON ECHOVERZÖGERUNG

PROCÉDÉ ET DISPOSITIF PERMETTANT DE SUIVRE UN RETARD D’ÉCHO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2016 CN 201610353009**

(43) Date of publication of application:
**10.04.2019 Bulletin 2019/15**

(73) Proprietor: **Tencent Technology (Shenzhen) Company Limited**
**Shenzhen, Guangdong 518057 (CN)**

(72) Inventor: **LIANG, Junbin**
**Shenzhen City**
**Guangdong 518057 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**WO-A1-2006/111369**
**CN-A- 101 026 659**
**CN-A- 102 726 034**
**CN-A- 105 472 191**
**CN-A- 105 872 156**
**US-A1- 2009 252 343**
**US-A1- 2009 316 924**
**US-A1- 2015 078 564**
**US-A1- 2016 127 527**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 468 162 B1

**Description**

FIELD OF THE TECHNOLOGY

This application relates to the field of computer communication, and in particular, to an echo delay tracking method and echo delay tracking apparatus.

BACKGROUND OF THE DISCLOSURE

Echo delay detection is a preprocessing sector of an acoustic echo cancellation algorithm. Before echo cancellation processing is performed, a time difference between a reference signal (a speaker play signal) and an echo signal of the reference signal, that is, an echo delay, is calculated first, so that adaptive filtering echo cancellation and non-linear echo suppression processing are performed subsequently. An existing solution has relatively weak interference immunity, and an echo delay is prone to be misdetermined, leading to many residual echoes.

US 2016/0127527 A1 describes a controller for an acoustic echo canceller. The controller includes a noise estimator configured to estimate a level of noise that is comprised in a microphone signal relative to an echo component, estimated by the acoustic echo canceller, comprised in the microphone signal. The controller further includes a control module configured to control the acoustic echo canceller in dependence on that estimate.

US 2015/0078564 A1 discloses one or more systems, apparatuses, methods, etc. for implementing an echo cancellation algorithm for long delayed echo that is created during a wire or wireless voice communications. In an implementation, a WiDi feature in a device during the wire or wireless voice communications may add an additional echo delay in addition to channel multipath delay when an audio sound signal travels from a WiDi component to a microphone of the device. In this implementation, a separate delay estimator is configured to estimate total delay. The estimated total delay is fed back to an adoptive filter component for long delay echo cancellation.

CN 105472191 A provides a method and a device for tracking echo time delay. The method comprises steps that, an echo reference signal and a sound input signal are acquired, and echo time delay of the echo reference signal at a present frame is determined by utilizing peak values of cross-correlation functions of the echo reference signal and the sound input signal at the present frame. According to the method and the device, in the process of acquiring the echo reference signal, the echo time delay of the echo reference signal at the present frame is determined by utilizing the peak values of the cross-correlation functions of the echo reference signal and the sound input signal at the present frame, so echo time delay of the echo reference signal at each frame is tracked, and bases are provided for eliminating time delay jittering and improving long-term stability of the echo elimination performance.

SUMMARY

Embodiments of this application provide an echo delay tracking method, an echo delay tracking apparatus, and a mobile electronic device, to effectively resolve a technical problem that an existing technical solution has relatively weak interference immunity, and an echo delay is prone to be misdetermined, leading to many residual echoes.

To resolve the foregoing technical problem, a first aspect of the embodiments of this application discloses an echo delay tracking method, including:

obtaining a current frame reference signal and a current frame collection signal; identifying target signal-to-noise ratio frequency information in the current frame collection signal, which includes: calculating a power spectrum of the current frame collection signal, and calculating a noise level of each frequency; calculating a signal-to-noise ratio of each frequency according to the power spectrum and the noise level; and obtaining a quantity and frequency position information of frequencies having a corresponding signal-to-noise ratio greater than a first preset threshold; analyzing whether a percentage of the quantity in a total quantity of frequencies of the current frame collection signal is greater than a second preset threshold; and in response to determining that said percentage is greater than the second preset threshold, determining that the current frame collection signal is a valid frame signal, performing a cross-correlation operation of the current frame reference signal and the current frame collection signal on a signal part corresponding to the target signal-to-noise ratio frequency; and
obtaining an echo delay value according to a result of the cross-correlation operation.

With reference to the first possible implementation of the first aspect, in a third possible implementation, the obtaining an echo delay value according to a result of the cross-correlation operation includes:

performing smoothing processing on a result of the cross-correlation operation, to obtain a smoothing processing value; and

selecting an echo delay value from the smoothing processing value.

With reference to the third possible implementation of the first aspect, in a fourth possible implementation, before the performing smoothing processing on a result of the cross-correlation operation, the method further includes:

calculating a power spectrum of the current frame reference signal, and calculating a smoothing value of each frequency;
performing binarization processing on the power spectrum and the smoothing value, to obtain a first binarization array;
caching binarization data of n frames before the current frame, to obtain a target array, the n being a positive integer;
counting a quantity of binary numerals in the target array and including 1;
calculating a weighting coefficient according to the quantity including 1; and
the performing smoothing processing on a result of the cross-correlation operation includes: performing weighted smoothing processing on the result of the cross-correlation operation according to the weighting coefficient.

With reference to the third possible implementation of the first aspect, in a fifth possible implementation, the performing a cross-correlation operation of the current frame reference signal and the current frame collection signal on a signal part corresponding to the target signal-to-noise ratio frequency includes:
obtaining, by means of calculation according to the following formula, a differential result value of history n frames and the current frame collection signal:

$$\mathrm{CxorR(i)} = \sum_{k \subseteq [\mathrm{m1-m2}]} \mathrm{Capb(k)\ \ Xor\ \ Refbbuf(i)(k)/size(k)},$$

where i is from 0 to n-1; m1=INT(M*500)/fs*2, m2=INT(M*1200)/fs*2; fs is a sampling frequency value, M is half of a quantity of Fast Fourier Transform FFT; k is frequency position information of a signal-to-noise ratio frequency greater than the first preset threshold and in the signal-to-noise ratio of each frequency of the current frame collection signal; Refbbuf(i)(k) is the first target array; and Capb(k) is a second binarization array obtained by performing the binarization processing according to the power spectrum of the current frame collection signal and the smoothing value of each frequency.
A second aspect of the embodiments of this application discloses an echo delay tracking apparatus at least including a processor and a memory, the memory stores an obtaining module, an identification module, a cross-correlation operation module, and a delay value obtaining module, and when being executed by the processor,
the obtaining module is configured to obtain a current frame reference signal and a current frame collection signal;
the identification module is configured to identify target signal-to-noise ratio frequency information in the current frame collection signal, wherein the identification module includes a first calculation unit, a second calculation unit, and a quantity obtaining unit, and when being executed by the processor,
the first calculation unit is configured to calculate a power spectrum of the current frame collection signal, and calculate a noise level of each frequency;
the second calculation unit is configured to calculate a signal-to-noise ratio of each frequency according to the power spectrum and the noise level; and
the quantity obtaining unit is configured to obtain a quantity and frequency position information of; frequencies having a corresponding signal-to-noise ratio greater than a first preset threshold;
wherein the memory further stores an analysis module, and when being performed by the processor:

the analysis module is configured to: after the identification module identifies the target signal-to-noise ratio frequency information in the current frame collection signal, analyze whether a percentage of the quantity in a total quantity of frequencies of the current frame collection signal is greater than a second preset threshold; and
in response to determining that said percentage is greater than the second preset threshold, determine that the current frame collection signal is a valid frame signal; and

the cross-correlation operation module is configured to: when it is determined that the current frame collection signal is a valid frame signal, perform a cross-correlation operation of the current frame reference signal and the current frame collection signal on a signal part corresponding to the target signal-to-noise ratio frequency; and the delay value obtaining module is configured to obtain an echo delay value according to a result of the cross-correlation operation.
With reference to the first possible implementation of the second aspect, in a third possible implementation, the delay value obtaining module includes a smoothing processing unit and a selection unit, and when being executed by the processor,

the smoothing processing unit is configured to perform smoothing processing on a result of the cross-correlation operation, to obtain a smoothing processing value; and

the selection unit is configured to select an echo delay value from the smoothing processing value.

With reference to the third possible implementation of the second aspect, in a fourth possible implementation, the memory is further configured to store a power spectrum smoothing calculation module, a binarization processing module, a cache module, a statistics module, and a weighting coefficient calculation module, and when being executed by the processor,

the power spectrum smoothing calculation module is configured to: before the smoothing processing unit performs the smoothing processing on the result of the cross-correlation operation, calculate a power spectrum of the current frame reference signal, and calculate a smoothing value of each frequency;

the binarization processing module is configured to perform binarization processing on the power spectrum and the smoothing value, to obtain a first binarization array;

the cache module is configured to cache binarization data of n frames before the current frame, to obtain a target array, the n being a positive integer;

the statistics module is configured to count a quantity of binary numerals in the target array and including 1;

the weighting coefficient calculation module is configured to calculate a weighting coefficient according to the quantity including 1; and

the smoothing processing unit is specifically configured to perform weighted smoothing processing on the result of the cross-correlation operation according to the weighting coefficient.

With reference to the third possible implementation of the second aspect, in a fifth possible implementation, when being executed by the processor, the cross-correlation operation module is specifically configured to:

obtain, by means of calculation according to the following formula, a differential result value of history n frames and the current frame collection signal:

$$\mathrm{CxorR(i)} = \sum_{k \subseteq [\mathrm{m1-m2}]} \mathrm{Capb(k)\ \ Xor\ \ Refbbuf(i)(k) / size(k)},$$

where i is from 0 to n-1; m1=INT(M*500)/fs*2 , m2=INT(M*1200)/fs*2; fs is a sampling frequency value, M is half of a quantity of FFT; k is frequency position information of a signal-to-noise ratio frequency greater than the first preset threshold and in the signal-to-noise ratio of each frequency of the current frame collection signal; Refbbuf(i)(k) is the first target array; and Capb(k) is a second binarization array obtained by performing the binarization processing according to the power spectrum of the current frame collection signal and the smoothing value of each frequency.

A third aspect of the embodiments of this application discloses a mobile electric device, including a processor, a memory, an input apparatus, and an output apparatus. The processor performs, by executing a synchronization service management program stored in the memory, all the steps of the echo delay tracking method in the first aspect, or the first possible implementation of the first aspect, or the second possible implementation of the first aspect, or the third possible implementation of the first aspect, or the fourth possible implementation of the first aspect, or the fifth possible implementation of the first aspect.

A fourth aspect of the embodiments of this application discloses a computer storage medium, the computer storage medium stores a program, and when being executed, the program includes all the steps of the echo delay tracking method in the first aspect, or the third possible implementation of the first aspect, or the fourth possible implementation of the first aspect, or the fifth possible implementation of the first aspect in the embodiments of this application.

(paragraph numbering excised)

## BRIEF DESCRIPTION OF THE DRAWINGS

To describe the technical solutions in the embodiments of this application or in the existing technology more clearly, the following briefly describes the accompanying drawings required for describing the embodiments or the existing technology. Apparently, the accompanying drawings in the following description show merely some embodiments of this application, and a person of ordinary skill in the art may still derive other drawings from these accompanying drawings without creative efforts.

FIG. 1 is a schematic flowchart of an echo cancellation algorithm module according to an embodiment of this application;

FIG. 2 is a schematic diagram of a principle of a related sector of generating an echo delay according to an embodiment of this application;

FIG. 3 is an architectural diagram of a scenario of an echo delay tracking method according to an embodiment of this application;

FIG. 4 is a schematic flowchart of an echo delay tracking method according to an embodiment of this application;

FIG. 5 is a schematic flowchart of an echo delay tracking method according to another embodiment of this application;

FIG. 6 is a schematic structural diagram of an echo delay tracking apparatus according to an embodiment of this application;

FIG. 7 is a schematic structural diagram of an identification module according to an embodiment of this application;

FIG. 8 is a schematic structural diagram of an echo delay tracking apparatus according to another embodiment of this application;

FIG. 9 is a schematic structural diagram of a delay value obtaining module according to an embodiment of this application;

FIG. 10 is a schematic structural diagram of an echo delay tracking apparatus according to another embodiment of this application; and

FIG. 11 is a schematic structural diagram of hardware of an echo delay tracking apparatus according to another embodiment of this application.

DESCRIPTION OF EMBODIMENTS

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application without creative efforts shall fall within the protection scope of this application.

FIG. 1 is a schematic flowchart of an echo cancellation algorithm module according to an embodiment of this application. When a voice reference signal that is from a speaker of a call device is transmitted through air and is picked up by a microphone, an echo is generated.

FIG. 2 is a schematic diagram of a principle of a related sector of generating an echo delay according to an embodiment of this application. Because an echo signal needs to be cached by an application layer, a system layer, and underlying firmware of a play end and a collection end, a relatively long delay is caused by the caches. In addition, voice is transmitted in the air, and a reference signal is arrived at the signal collection end after a relatively long delay. An echo cancellation module has to perform, after a delay detection module performs accuracy detection on the foregoing delay, echo cancellation on the double-end signals on which delay cancellation and timeline alignment are performed.

In the technical solutions in FIG. 1 and FIG. 2, that based on calculation of a cross-correlation function of a remote end signal and a local end signal (the remote end signal is the reference signal sent by the speaker, and the local end signal is the signal collected by the microphone), a maximum value of relevance is searched, and a time difference that is between the remote end signal and the local end signal and that corresponds to the value is used as an echo delay value specifically includes: performing FFT on the remote end signal and the local end signal, to obtain a remote end power spectrum and a local end power spectrum, and then calculating a cross-correlation function of the power spectrums of the remote end signal and the local end signal in a current frame, tracking and filtering the cross-correlation function, and using a peak value of a filtering result as the echo delay value.

As shown in FIG. 3, FIG. 3 is an architectural diagram of a scenario of an echo delay tracking method according to an embodiment of this application. A voice connection may be established between electronic devices by using a network server, to perform voice communication. A data sender may send in real time a collected voice data frame by using a collection apparatus such as a microphone to a data receiver, and at the same time play in real time, by using a speaker, a voice data frame sent by the data receiver. The electric device needs to perform echo delay processing on a remote end voice signal and a local end voice signal, to cancel an echo and non-linear echo suppression.

The following describes in detail with reference to FIG. 4, a schematic flowchart of an echo delay tracking method according to an embodiment of this application, a technical solution of the echo delay tracking method provided in the embodiment of this application. The technical solution includes the following steps:

Step S400: Obtain a current frame reference signal and a current frame collection signal.

Specifically, a voice communication connection is established between two voice communication parties, and both electric devices of the two parties can obtain in real time a voice signal sent by the peer end (that is, a voice reference signal) and a voice signal collected by the local end (that is, a voice collection signal).

Step S402: Identify target signal-to-noise ratio frequency information in the current frame collection signal.

Specifically, an electric device identifies a collection signal of a current frame, a threshold may be preset (that is, a first preset threshold, the threshold may be set to 0.1, and a technical person may set the threshold according to requirements or experience of the person), and a signal-to-noise ratio of each frequency of the current frame collection signal is compared with the first preset threshold, to find out all signal-to-noise ratio frequencies that are greater than the first preset threshold, and use the signal-to-noise ratio frequencies as target signal-to-noise ratio frequencies. It may be understood that, the target signal-to-noise ratio frequency is a high signal-to-noise ratio frequency, and the first preset threshold is not limited in the embodiment of this application. The technical person may set the first preset threshold according to the requirements or experience of the technical person, and determine a high signal-to-noise ratio frequency in the embodiment of this application according to the first preset threshold. The target signal-to-noise ratio frequency information in the embodiment of this application may include a quantity, or a position, or information related to a quantity, or information related to a position, or the like of the target signal-to-noise ratio frequency.

Step S404: When it is determined, according to the target signal-to-noise ratio frequency information, that the current frame collection signal is a valid frame signal satisfying a preset condition, perform a cross-correlation operation of the current frame reference signal and the current frame collection signal on a signal part corresponding to the target signal-to-noise ratio frequency.

Specifically, in the embodiment of this application, a determining policy may be preset, and whether a current frame collection signal is a valid frame signal is determined according to the target signal-to-noise ratio frequency information. For example, whether a current frame collection signal is a valid frame signal may be determined according to a quantity of the target signal-to-noise ratio frequencies, or position distribution of the target signal-to-noise ratio frequency, or the like, including whether the quantity reaches a preset value, or whether a percentage that the quantity of the target signal-to-noise ratio frequencies in all frequencies reaches a preset value, or whether position distribution matches a preset situation, or the like, and is not limited in the embodiment of this application. The technical person may set the determining policy according to an actual situation, and the determining policy shall fall within the protection scope of the embodiment of this application provided that whether a current frame collection signal is a valid frame signal is determined according to the target signal-to-noise ratio frequency information.

In the embodiment of this application, the cross-correlation operation is performed only on the valid frame signal. If it is determined that the current frame collection signal is not a valid frame signal, echo delay tracking processing may not be performed on the current frame collection signal. If it is determined that the current frame collection signal is a valid frame signal, the cross-correlation operation of the current frame reference signal and the current frame collection signal is performed only on a signal part corresponding to the target signal-to-noise ratio frequency, to obtain a result of the cross-correlation operation.

Step S406: Obtain an echo delay value according to a result of the cross-correlation operation.

Specifically, in a regular voice call application, a most common factor that interferes echo delay tracking is mainly a local end background noise. The local end background noise is collected by the microphone together with the echo signal. Because a noise may be a stable noise or may be an unstable noise, even though a noise suppression module is added before the echo delay tracking processing is performed, it is very difficult to obtain a pure echo signal without a noise. As a result, such a noisy signal affects the accuracy of a cross-correlation operation of spectrum energy. Especially, in a low signal-to-noise ratio application scenario, a noise is more powerful than a signal, a cross-correlation value obtained in this case has a great error, and a finally tracked echo delay value is inaccurate, directly leading to that an echo cancellation module cannot cancel an echo, and that the echo is residual and local end voice is destroyed. A result that is of the cross-correlation operation and that is obtained according to step S404 is that the cross-correlation operation is performed only on a signal part of a high signal-to-noise ratio frequency, and therefore it is avoided that a low signal-to-noise ratio frequency interferes the accuracy of the cross-correlation operation, a technical problem that an existing technical solution has relatively weak interference immunity, and an echo delay is prone to be misdetermined, leading to many residual echoes is effectively resolved, and the accuracy of the echo delay value is greatly improved.

Further, as shown in FIG. 5, FIG. 5 is a schematic flowchart of an echo delay tracking method according to another embodiment of this application. Specific implementations of the echo delay tracking method in this application are described in detail by using an example, and include the following steps:

Step S500: Obtain a current frame reference signal and a current frame collection signal.

Specifically, refer to step S400 in the embodiment in FIG. 4, and details are not described herein again.

Step S502: Calculate a power spectrum of the current frame reference signal, and calculate a smoothing value of each frequency.

Specifically, the FFT may be performed on the current frame reference signal, to obtain a power spectrum Ref(j), where j=m1~m2, m1=INT(M*500)/fs*2, m2=INT(M*1200)/fs*2, M is half of a quantity of points of FFT, and fs is a sampling frequency value. Then, a smoothing value Refsm(j)=0.98* Refsm(j)+0.02* Ref(j) of Ref(j) of each frequency is calculated.

Step S504: Perform binarization processing on the power spectrum and the smoothing value, to obtain a first binarization array.

Specifically, numeral comparison may be performed between Ref(j) and Refsm(j). If Ref(j) is greater than Refsm(j), the first binarization array is 1; otherwise the first binarization array is 0, so that the first binarization array is obtained, that is, a binarization array of Refb(j) is obtained.

Step S506: Cache binarization data of n frames before the current frame, to obtain a target array.

Specifically, the target array may be obtained by saving Refb(j) to a Refbbuf(i) (j) array, where i=0~n-1, and a size of the array is n*(m2-m1), where n is a positive integer.

Step S508: Count a quantity of binary numerals in the first target array and including 1.

Specifically, a quantity of binary numerals One_Ref(i) of each Refbbuf(i) and including 1 may be counted, where i=0~n-1.

Step S510: Calculate a weighting coefficient according to the quantity including 1.

Specifically, a weighting coefficient a(i) may be calculated by using a(i)=0.0005+0.002* One_Ref(i)/(m2-m1), where i=0~n-1.

Step S512: Calculate a power spectrum of the current frame collection signal, and calculate a noise level of each frequency.

Specifically, the FFT may be performed on the current frame reference signal, to obtain a power spectrum Capf(j), where j=m1~m2, m1=INT(M*500)/fs*2, m2=INT(M*1200)/fs*2, M is half of a quantity of points of FFT, and fs is a sampling frequency value. Then, a smoothing value Capsm(j)=0.98*Capsm(j)+0.02*Cap(j) of Capf(j) of each frequency is calculated. A noise level N(j) of each frequency may be estimated by using a minima controlled recursive averaging (MCRA) algorithm, where j=m1~m2.

Step S514: Calculate a smoothing value of each frequency of the current frame collection signal.

Specifically, in the embodiment of this application, it may be calculated that a smoothing value of Capf(j) of each frequency is Capsm(j)=0.98*Capsm(j)+0.02*Cap(j).

Step S516: Perform binarization processing on the power spectrum and the smoothing value, to obtain a second binarization array.

Specifically, numeral comparison may be performed between Cap(j) and Capsm(j). If Cap(j) is greater than Capsm(j), the second binarization array is 1; otherwise the second binarization array is 0, so that the second binarization array is obtained, that is, a binarization array of Capb(j) is obtained.

Step S518: Calculate a signal-to-noise ratio of each frequency according to the power spectrum and the noise level.

Specifically, a signal-to-noise ratio snr(j) of each frequency may be obtained by means of calculation by using snr(j)= Cap(j)/ N(j), where j=m1~m2.

Step S520: Obtain a quantity and frequency position information of signal-to-noise ratio frequencies greater than the first preset threshold and in the signal-to-noise ratio of each frequency.

Specifically, a corresponding frequency of snr(j)>THRES_SNR (that is, the first preset threshold) may be identified as k, where $k \subseteq$ [m1 - m2], representing frequency position information of a signal-to-noise ratio frequency greater than the first preset threshold and in the signal-to-noise ratio of each frequency, and a quantity L of signal-to-noise ratio frequencies that are greater than the first preset threshold and that is in the signal-to-noise ratio of each frequency may be counted.

Step S522: Analyze whether a percentage of the quantity in a total quantity of frequencies of the current frame collection signal is greater than a second preset threshold.

Specifically, the analysis may be performed by determining whether L/(m2-m1)>the second preset threshold. The second preset threshold in the embodiment of this application is a number greater than or equal to 0 and less than or equal to 1, and may be 0.6, 0.7, or the like. The second preset threshold is not limited in the embodiment of this application, and the technical person may set the second preset threshold according to the requirements or experience of the technical person.

When the analysis result is yes, it is determined that the current frame collection signal is a valid frame signal satisfying the preset condition, and step S524 is performed; otherwise, it is determined that the current frame collection signal is not a valid frame signal satisfying the preset condition, and operations such as echo delay tracking may be given up and is not performed on the current frame collection signal; or the like. This is not limited in the embodiment of this application.

Step S524: Perform a cross-correlation operation of the current frame reference signal and the current frame collection signal on a signal part corresponding to the target signal-to-noise ratio frequency.

A differential result value of history n frames and the current frame collection signal is obtained by means of calculation according to the following formula:

$$CxorR(i) = \sum_{k \subseteq [m1-m2]} Capb(k) \;\; Xor \;\; Refbbuf(i)(k)/size(k)$$

,

where i is from 0 to n-1; m1=INT(M*500)/fs*2 , m2=INT(M*1200)/fs*2; fs is a sampling frequency value, M is half of a quantity of the FFT; k is frequency position information of a signal-to-noise ratio frequency greater than the first preset threshold and in the signal-to-noise ratio of each frequency of the current frame collection signal; Refbbuf(i)(k) is the first target array; and Capb(k) is a second binarization array obtained by performing the binarization processing according to the power spectrum of the current frame collection signal and the smoothing value of each frequency.

Step S526: Perform weighted smoothing processing on a result of the cross-correlation operation according to the weighting coefficient, to obtain a smoothing processing value.

Specifically, the weighted smoothing processing may be performed according to a formula CxorRsm(i)=(1-a(i))* CxorRsm(i)+a(i)*CxorR(i).

Step S528: Select an echo delay value from the smoothing processing value.

Specifically, an i value corresponding to a minimum value in n CxorRsm (i) values may be used as a candidate echo delay value, and the candidate echo delay value is tracked and is determined as a finally selected echo delay value if the candidate echo delay value satisfies the following three conditions:

1. A peak valley difference of n CxorRsm (i) values needs to be greater than 5.5.

2. A minimum value in CxorRsm (i) needs to be less than 17.5.

3. The candidate echo delay value continuously keeps unchanged in k frames.

It should be noted that, performance of step S510 and S512 may be omitted, and the smoothing processing in step S524 may be replaced by using the following formula:

$$CxorRsm(i)=(1-a)^{*}\ CxorRsm(i)+a^{*}CxorR(i),$$

where a is a filtering coefficient.

It should be further noted that, step S502 to S510 and step S512 to S522 may be performed at the same time or may be performed in any sequence. This is not limited in the embodiment of this application. Step S514 to S516 and step S518 to S522 may be performed at the same time or may be performed in any sequence. This is not limited in the embodiment of this application.

By implementing the embodiment of this application, target signal-to-noise ratio frequency information in a current frame collection signal is identified, the target signal-to-noise ratio frequency being a signal-to-noise ratio frequency greater than a first preset threshold, and then a cross-correlation operation of a current frame reference signal and a current frame collection signal is performed only on a signal part corresponding to the target signal-to-noise ratio frequency, and finally an echo delay value is obtained according to a result of the cross-correlation operation, so that it is avoided that a low signal-to-noise ratio frequency interferes the accuracy of the cross-correlation operation, and a technical problem that an existing technical solution has relatively weak interference immunity, and an echo delay is prone to be misdetermined, leading to many residual echoes is effectively resolved, and the accuracy of the echo delay value is greatly improved. In addition, weighted smoothing processing may be performed on the result of the cross-correlation operation, so that a larger weight is granted by means of weighting to a frame whose feature is obvious, and a convergence speed of echo delay tracking is improved.

To better implement the foregoing solutions in the embodiments of this application, this application further correspondingly provides an echo delay tracking apparatus. As shown in FIG. 6, FIG. 6 is a schematic structural diagram of an echo delay tracking apparatus according to an embodiment of this application. The echo delay tracking apparatus 60 may include an obtaining module 600, an identification module 602, a cross-correlation operation module 604, and a delay value obtaining module 606.

The obtaining module 600 is configured to obtain a current frame reference signal and a current frame collection signal.

The identification module 602 is configured to identify target signal-to-noise ratio frequency information in the current frame collection signal, the target signal-to-noise ratio frequency being a signal-to-noise ratio frequency greater than a first preset threshold.

The cross-correlation operation module 604 is configured to: when it is determined, according to the target signal-to-noise ratio frequency information, that the current frame collection signal is a valid frame signal satisfying a preset condition, perform a cross-correlation operation of the current frame reference signal and the current frame collection signal on a signal part corresponding to the target signal-to-noise ratio frequency.

The delay value obtaining module 606 is configured to obtain an echo delay value according to a result of the cross-correlation operation.

Specifically, as shown in FIG. 7, FIG. 7 is a schematic structural diagram of an identification module according to an embodiment of this application. The identification module 602 may include a first calculation unit 6020, a second calculation unit 6022, and a quantity obtaining unit 6024.

The first calculation unit 6020 is configured to calculate a power spectrum of the current frame collection signal, and calculate a noise level of each frequency.

The second calculation unit 6022 is configured to calculate a signal-to-noise ratio of each frequency according to the power spectrum and the noise level.

The quantity obtaining unit 6024 is configured to obtain a quantity and frequency position information of signal-to-noise ratio frequencies greater than the first preset threshold and in the signal-to-noise ratio of each frequency.

Further, as shown in FIG. 8, FIG. 8 is a schematic structural diagram of an echo delay tracking apparatus according to another embodiment of this application. The echo delay tracking apparatus 60 includes an obtaining module 600, an identification module 602, a cross-correlation operation module 604, and a delay value obtaining module 606, and may further include an analysis module 608, configured to: after the identification module 602 identifies the target signal-to-noise ratio frequency information in the current frame collection signal, analyze whether a percentage of the quantity in a total quantity of frequencies of the current frame collection signal is greater than a second preset threshold; and

when an analysis result is yes, determine that the current frame collection signal is a valid frame signal satisfying a preset condition, and trigger the cross-correlation operation module 604 to perform an operation.

Still further, as shown in FIG. 9, FIG. 9 is a schematic structural diagram of a delay value obtaining module according to an embodiment of this application. The delay value obtaining module 606 may include a smoothing processing unit 6060 and a selection unit 6062.

The smoothing processing unit 6060 is configured to perform smoothing processing on a result of the cross-correlation operation, to obtain a smoothing processing value.

The selection unit 6062 is configured to select an echo delay value from the smoothing processing value.

Still further, as shown in FIG. 10, FIG. 10 is a schematic structural diagram of an echo delay tracking apparatus according to another embodiment of this application. The echo delay tracking apparatus 60 includes an obtaining module 600, an identification module 602, a cross-correlation operation module 604, a delay value obtaining module 606, and an analysis module 608, and may further include a power spectrum smoothing calculation module 6010, a binarization processing module 6012, a cache module 6014, a statistics module 6016, and a weighting coefficient calculation module 6018.

The power spectrum smoothing calculation module 6010 is configured to: before the smoothing processing unit performs the smoothing processing on the result of the cross-correlation operation, calculate a power spectrum of the current frame reference signal, and calculate a smoothing value of each frequency.

The binarization processing module 6012 is configured to perform binarization processing on the power spectrum and the smoothing value, to obtain a first binarization array.

The cache module 6014 is configured to cache binarization data of n frames before the current frame, to obtain a target array, the n being a positive integer.

The statistics module 6016 is configured to count a quantity of binary numerals in the target array and including 1.

The weighting coefficient calculation module 6018 is configured to calculate a weighting coefficient according to the quantity including 1.

The smoothing processing unit 6060 is specifically configured to perform weighted smoothing processing on the result of the cross-correlation operation according to the weighting coefficient.

Still further, the cross-correlation operation module 604 may be specifically configured to:

obtain, by means of calculation according to the following formula, a differential result value of history n frames and the current frame collection signal:

$$\mathrm{CxorR(i)} = \sum_{k \subseteq [m1-m2]} \mathrm{Capb(k)\ \ Xor\ \ Refbbuf(i)(k)/size(k)},$$

where i is from 0 to n-1; m1=INT(M*500)/fs*2 , m2=INT(M*1200)/fs*2; fs is a sampling frequency value, M is half of a quantity of the FFT; k is frequency position information of a signal-to-noise ratio frequency greater than the first preset threshold and in the signal-to-noise ratio of each frequency of the current frame collection signal; Refbbuf(i)(k) is the first target array; and Capb(k) is a second binarization array obtained by performing the binarization processing according to the power spectrum of the current frame collection signal and the smoothing value of each frequency.

FIG. 11 is a schematic structural diagram of hardware of an echo delay tracking apparatus according to another embodiment of this application. The apparatus may include a processor 1101, a bus 1102, and a memory 1103. The processor 1101 and the memory 1103 are connected to each other by using the bus 1102.

The memory 1103 stores an obtaining module 600, an identification module 602, a cross-correlation operation module 604, and a delay value obtaining module 606.

The memory 1103 may further store an analysis module 608, a power spectrum smoothing calculation module 6010, a binarization processing module 6012, a cache module 6014, a statistics module 6016, and a weighting coefficient calculation module 6018.

The delay value obtaining module 606 may further include a smoothing processing unit 6060 and a selection unit 6062.

When the modules stored in the memory 1103 are executed by the processor 1101, operations performed by the modules are the same as those in the foregoing embodiment, and details are not described herein again.

In conclusion, by implementing the embodiment of this application, target signal-to-noise ratio frequency information in a current frame collection signal is identified, the target signal-to-noise ratio frequency being a signal-to-noise ratio frequency greater than a first preset threshold, and then a cross-correlation operation of a current frame reference signal and a current frame collection signal is performed only on a signal part corresponding to the target signal-to-noise ratio frequency, and finally an echo delay value is obtained according to a result of the cross-correlation operation, so that it is avoided that a low signal-to-noise ratio frequency interferes the accuracy of the cross-correlation operation, and a technical problem that an existing technical solution has relatively weak interference immunity, and an echo delay is prone to be misdetermined, leading to many residual echoes is effectively resolved, and the accuracy of the echo delay value is greatly improved. In addition, weighted smoothing processing may be performed on the result of the cross-correlation operation, so that a larger weight is granted by means of weighting to a frame whose feature is obvious, and a convergence speed of echo delay tracking is improved.

A person of ordinary skill in the art may understand that all or some of the processes of the methods in the embodiments may be implemented by a computer program instructing relevant hardware. The program may be stored in a computer-readable storage medium. When the program is executed, the processes of the methods in the embodiments may be performed. The foregoing storage medium may be: a magnetic disk, an optical disc, a read-only memory (ROM), a random access memory (RAM), or the like.

What is disclosed above is merely an example of the embodiments of this application: variations within the scope of the appended claims fall within the scope of the application.

## Claims

**1.** An echo delay tracking method, comprising:

obtaining (S400, S500) a current frame reference signal and a current frame collection signal;
identifying (S402) target signal-to-noise ratio frequency information in the current frame collection signal, which comprises: calculating (S512) a power spectrum of the current frame collection signal, and calculating (S512) a noise level of each frequency; calculating (S518) a signal-to-noise ratio of each frequency according to the power spectrum and the noise level; and obtaining (S520) a quantity and frequency position information of frequencies having a corresponding signal-to-noise ratio greater than a first preset threshold;
analyzing (S522) whether a percentage of the quantity in a total quantity of frequencies of the current frame collection signal is greater than a second preset threshold; and response to determining that said percentage is greater than the second preset threshold,
determining that the current frame collection signal is a valid frame signal,
performing (S404, S524) a cross-correlation operation of the current frame reference signal and the current frame collection signal on a signal part corresponding to the target signal-to-noise ratio frequency; and
obtaining (S406) an echo delay value according to a result of the cross-correlation operation.

**2.** The method according to claim 1, wherein the obtaining (S406) an echo delay value according to a result of the cross-correlation operation comprises:

performing smoothing processing on a result of the cross-correlation operation, to obtain a smoothing processing value; and
selecting (S528) an echo delay value from the smoothing processing value.

3. The method according to claim 2, wherein before the performing smoothing processing on a result of the cross-correlation operation, the method further comprises:

calculating (S502) a power spectrum of the current frame reference signal, and calculating a smoothing value of each frequency;
performing (S504) binarization processing on the power spectrum and the smoothing value, to obtain a first binarization array;
caching (S506) binarization data of n frames before the current frame, to obtain a target array, the n being a positive integer;
counting (S508) a quantity of binary numerals in the target array and comprising 1;
calculating (S510) a weighting coefficient according to the quantity comprising 1; and
the performing smoothing processing on a result of the cross-correlation operation comprises: performing (S526) weighted smoothing processing on the result of the cross-correlation operation according to the weighting coefficient.

4. The method according to claim 2, wherein the performing (S404) a cross-correlation operation of the current frame reference signal and the current frame collection signal on a signal part corresponding to the target signal-to-noise ratio frequency comprises:
obtaining, by means of calculation according to the following formula, a differential result value of history n frames and the current frame collection signal:

$$CxorR(i) = \sum_{k \subseteq [m1-m2]} Capb(k)\ \ Xor\ \ Refbbuf(i)(k) / size(k)$$ ,

wherein i is from 0 to n-1; m1=INT(M*500)/fs*2 , m2=INT(M*1200)/fs*2; fs is a sampling frequency value, M is half of a quantity of Fast Fourier Transform FFT; k is frequency position information of a signal-to-noise ratio frequency greater than the first preset threshold and in the signal-to-noise ratio of each frequency of the current frame collection signal; Refbbuf(i)(k) is the first target array; and Capb(k) is a second binarization array obtained by performing the binarization processing according to the power spectrum of the current frame collection signal and the smoothing value of each frequency.

5. An echo delay tracking apparatus, at least comprising a processor and a memory, wherein the memory stores an obtaining module (600), an identification module (602), a cross-correlation operation module (604), and a delay value obtaining module (606), and when being executed by the processor,
the obtaining module (600) is configured to obtain a current frame reference signal and a current frame collection signal;
the identification module (602) is configured to identify target signal-to-noise ratio frequency information in the current frame collection signal, wherein the identification module comprises a first calculation unit, a second calculation unit, and a quantity obtaining unit, and when being executed by the processor,
the first calculation unit (6020) is configured to calculate a power spectrum of the current frame collection signal, and calculate a noise level of each frequency;
the second calculation unit (6022) is configured to calculate a signal-to-noise ratio of each frequency according to the power spectrum and the noise level; and
the quantity obtaining unit (6024) is configured to obtain a quantity and frequency position information of; frequencies having a corresponding signal-to-noise ratio greater than a first preset threshold;
wherein the memory further stores an analysis module, and when being performed by the processor:

the analysis module (608) is configured to: after the identification module identifies the target signal-to-noise ratio frequency information in the current frame collection signal, analyze whether a percentage of the quantity in a total quantity of frequencies of the current frame collection signal is greater than a second preset threshold; and
in response to determining that said percentage is greater than the second preset threshold, determine that the current frame collection signal is a valid frame signal; and
the cross-correlation operation module is configured to: when it is determined that the current frame collection signal is a valid frame signal, perform a cross-correlation operation of the current frame reference signal and the current frame collection signal on a signal part corresponding to the target signal-to-noise ratio frequency;
and the delay value obtaining module is configured to obtain an echo delay value according to a result of the cross-correlation operation.

6. The apparatus according to claim 5, wherein the delay value obtaining module (606) comprises a smoothing processing unit (6060) and a selection unit (6062), and when being executed by the processor, the smoothing processing unit (6060) is configured to perform smoothing processing on a result of the cross-correlation operation, to obtain a smoothing processing value; and the selection unit (6062) is configured to select an echo delay value from the smoothing processing value.

7. The apparatus according to claim 6, wherein the memory is further configured to store a power spectrum smoothing calculation module (6010), a binarization processing module (6012), a cache module (6014), a statistics module (6016), and a weighting coefficient calculation module (6018), and when being executed by the processor, the power spectrum smoothing calculation module (6010) is configured to: before the smoothing processing unit performs the smoothing processing on the result of the cross-correlation operation, calculate a power spectrum of the current frame reference signal, and calculate a smoothing value of each frequency; the binarization processing module (6012) is configured to perform binarization processing on the power spectrum and the smoothing value, to obtain a first binarization array; the cache module (6014) is configured to cache binarization data of n frames before the current frame, to obtain a target array, the n being a positive integer; the statistics module (6016) is configured to count a quantity of binary numerals in the target array and comprising 1; the weighting coefficient calculation module (6018) is configured to calculate a weighting coefficient according to the quantity comprising 1; and the smoothing processing unit (6060) is specifically configured to perform weighted smoothing processing on the result of the cross-correlation operation according to the weighting coefficient.

8. The apparatus according to claim 6, wherein when being executed by the processor, the cross-correlation operation module (604) is specifically configured to: obtain, by means of calculation according to the following formula, a differential result value of history n frames and the current frame collection signal:

$$CxorR(i) = \sum_{k \subseteq [m1-m2]} Capb(k)\ \ Xor\ \ Refbbuf(i)(k) / size(k) ,$$

wherein i is from 0 to n-1; m1=INT(M*500)/fs*2 , m2=INT(M*1200)/fs*2; fs is a sampling frequency value, M is half of a quantity of Fast Fourier Transform FFT; k is frequency position information of a signal-to-noise ratio frequency greater than the first preset threshold and in the signal-to-noise ratio of each frequency of the current frame collection signal; Refbbuf(i)(k) is the first target array; and Capb(k) is a second binarization array obtained by performing the binarization processing according to the power spectrum of the current frame collection signal and the smoothing value of each frequency.

9. A non-volatile computer storage medium, wherein the non-volatile computer storage medium stores a computer program, which, when executed by a computer, cause the computer to carry out the method according to any one of claims 1 to 4.

## Patentansprüche

1. Verfahren zur Verfolgung einer Echoverzögerung, aufweisend die folgenden Schritte:

Erhalten (S400, S500) eines aktuellen Rahmen-Referenzsignals und eines aktuellen Rahmen-Sammelsignals; Identifizieren (S402) von Zielfrequenzinformation des Signal-Rausch-Verhältnisses in dem aktuellen Rahmen-Sammelsignal, welches folgende Schritte umfasst: Berechnen (S512) eines Leistungsspektrums des aktuellen Rahmen-Sammelsignals und Berechnen (S512) eines Rauschpegels jeder Frequenz; Berechnen (S518) eines Signal-Rausch-Verhältnisses jeder Frequenz entsprechend dem Leistungsspektrum und dem Rauschpegel; und Erhalten (S520) einer Mengen- und Frequenzpositions-Information von Frequenzen mit einem entsprechenden Signal-Rausch-Verhältnis, das größer ist als ein erster voreingestellter Schwellenwert ist; Analysieren (S522), ob ein Prozentsatz der Menge von einer Gesamtmenge von Frequenzen des aktuellen Rahmen-Sammelsignals größer ist als ein zweiter voreingestellter Schwellenwert; und als Reaktion auf das Bestimmen, dass der Prozentsatz größer als der zweite voreingestellte Schwellenwert ist,
Bestimmen ob das aktuelle Rahmen-Sammelsignal ein gültiges Rahmen-Signal ist,
Durchführen (S404, S524) einer Kreuzkorrelationsoperation des aktuellen Rahmen-Referenzsignals und des aktuellen Rahmen-Sammelsignals an einem Signalabschnitt, der der Zielfrequenz des Signal-Rausch-Verhältnisses entspricht; und
Erhalten (S406) eines Echoverzögerungswertes entsprechend einem Ergebnis der Kreuzkorrelationsoperation.

**2.** Verfahren nach Anspruch 1, wobei das Erhalten (S406) eines Echoverzögerungswertes gemäß einem Ergebnis der Kreuzkorrelationsoperation umfasst:

Durchführen einer Glättungsverarbeitung an einem Ergebnis der Kreuzkorrelationsoperation, um einen Glättungsverarbeitungswert zu erhalten; und
Auswählen (S528) eines Echoverzögerungswertes aus dem Glättungsverarbeitungswert.

**3.** Verfahren nach Anspruch 2, wobei das Verfahren vor dem Durchführen einer Glättungsverarbeitung an einem Ergebnis der Kreuzkorrelationsoperation weiterhin folgende Schritte aufweist:

Berechnen (S502) eines Leistungsspektrums des aktuellen Rahmen-Referenzsignals und Berechnen eines Glättungswertes für jede Frequenz;
Durchführen (S504) einer Binärisierungsverarbeitung an dem Leistungsspektrum und dem Glättungswert, um ein erstes Binärisierungsarray zu erhalten;
Zwischenspeichern (S506) von Binärisierungsdaten von n Rahmen vor dem aktuellen Rahmen, um ein Zielarray zu erhalten, wobei n eine positive ganze Zahl ist;
Zählen (S508) einer Menge von aus Einsen bestehenden Binärziffern in dem Zielarray;
Berechnen (S510) eines Gewichtungskoeffizienten gemäß der Menge an Einsen; und wobei das Durchführen einer Glättungsverarbeitung an einem Ergebnis der Kreuzkorrelationsoperation das Durchführen (S526) einer gewichteten Glättungsverarbeitung an dem Ergebnis der Kreuzkorrelationsoperation entsprechend dem Gewichtungskoeffizienten umfasst.

**4.** Verfahren nach Anspruch 2, wobei das Durchführen (S404) einer Kreuzkorrelationsoperation am aktuellen Rahmen-Referenzsignal und am aktuellen Rahmen-Sammelsignal an einem Signalabschnitt, der der Zielfrequenz des Signal-Rausch-Verhältnisses entspricht, folgenden Schritt aufweist:
Erhalten eines differentiellen Ergebniswertes von n vorangegangenen Rahmen und dem aktuellen Rahmen-Sammelsignal durch Berechnung nach folgender Formel:

$$\mathrm{CxorR(i)} = \sum_{k \subseteq [\mathrm{m1-m2}]} \mathrm{Capb(k)\ \ Xor\ \ Refbbuf(i)(k) / size(k)}$$

wobei i von 0 bis n-1 geht; m1=INT(M*500)/fs*2 , m2=INT(M*1200)/fs*2; fs ein Frequenzabtastwert ist, M die Hälfte einer Menge einer Fast Fourier Transformation FFT ist; k die Frequenzpositionsinformation einer Signal-Rausch-Verhältnis-Frequenz ist, die größer ist als der erste voreingestellte Schwellenwert und in dem Signal-Rausch-Verhältnis jeder Frequenz des aktuellen Rahmen-Sammelsignals enthalten ist; Refbbuf(i)(k) das erste Zielarray ist; und Capb(k) ein zweites Binärisierungsarray ist, das durch Ausführen der Binärisierungsverarbeitung gemäß dem Leistungsspektrum des aktuellen Rahmen-Sammelsignals und dem Glättungswert jeder Frequenz erhalten wird.

**5.** Vorrichtung zur Verfolgung einer Echoverzögerung, aufweisend zumindest einen Prozessor und einen Speicher, wobei der Speicher ein Erhaltungsmodul (600), ein Identifikationsmodul (602), ein Kreuzkorrelationsoperationsmodul (604) und ein Modul (606) zum Erhalten eines Verzögerungswertes speichert, und, wenn es von dem Prozessor ausgeführt wird,
das Erhaltungsmodul (600) so konfiguriert ist, dass es ein aktuelles Rahmen-Referenzsignal und ein aktuelles Rahmen-Sammelsignal erhält;
das Identifikationsmodul (602) so konfiguriert ist, dass es Zielfrequenzinformation des Signal-Rausch-Verhältnisses in dem aktuellen Rahmen-Sammelsignal identifiziert, wobei das Identifikationsmodul eine erste Berechnungseinheit, eine zweite Berechnungseinheit und eine Mengengewinnungseinheit umfasst, und, wenn sie von dem Prozessor ausgeführt wird,
die erste Berechnungseinheit (6020) so konfiguriert ist, dass sie ein Leistungsspektrum des aktuellen Rahmen-Sammelsignals berechnet und für jede Frequenz einen Rauschpegel berechnet;

die zweite Berechnungseinheit (6022) so konfiguriert ist, dass sie ein Signal-Rausch-Verhältnis jeder Frequenz gemäß dem Leistungsspektrum und dem Rauschpegel berechnet; und
die Mengenermittlungseinheit (6024) konfiguriert ist, um eine Mengen- und Frequenzpositions-Information von Frequenzen zu erhalten, die ein entsprechendes Signal-Rausch-Verhältnis aufweisen, das größer ist als ein erster voreingestellter Schwellenwert, wobei der Speicher ferner ein Analysemodul speichert, und, wenn es durch den Prozessor ausgeführt wird,
das Analysemodul (608) so konfiguriert ist, dass es, nachdem das Identifikationsmodul die Zielfrequenzinformation des Signal-Rausch-Verhältnisses im aktuellen Rahmen-Sammelsignal identifiziert hat, analysiert, ob ein Prozentsatz der Menge von einer Gesamtmenge an Frequenzen des aktuellen Rahmen-Sammelsignals größer als ein zweiter voreingestellter Schwellenwert ist; und
als Reaktion auf die Feststellung, dass dieser Prozentsatz größer ist als der zweite voreingestellte Schwellenwert, feststellt, dass das aktuelle Rahmen-Sammelsignal ein gültiges Rahmen-Signal ist, und
das Kreuzkorrelationsoperationsmodul so konfiguriert ist, dass es, wenn festgestellt wird, dass das aktuelle Rahmen-Sammelsignal ein gültiges Rahmen-Signal ist, eine Kreuzkorrelationsoperation des aktuellen Rahmen-Referenzsignals und des aktuellen Rahmen-Sammelsignals an einem Signalabschnitt durchführt, der der Zielfrequenz des Signal-Rausch-Verhältnisses entspricht; und
das Modul zum Erhalten eines Verzögerungswertes so konfiguriert ist, dass es einen Echoverzögerungswert gemäß einem Ergebnis der Kreuzkorrelationsoperation erhält.

**6.** Vorrichtung nach Anspruch 5, wobei das Modul (606) zum Erhalten eines Verzögerungswertes eine Glättungsverarbeitungseinheit (6060) und eine Auswahleinheit (6062) umfasst, und, wenn es vom Prozessor ausgeführt wird,
die Glättungsverarbeitungseinheit (6060) so konfiguriert ist, dass sie eine Glättungsverarbeitung an einem Ergebnis der Kreuzkorrelationsoperation durchführt, um einen Glättungsverarbeitungswert zu erhalten; und
die Auswahleinheit (6062) so konfiguriert ist, dass sie einen Echoverzögerungswert aus dem Glättungsverarbeitungswert auswählt.

**7.** Vorrichtung nach Anspruch 6, wobei der Speicher ferner so konfiguriert ist, dass er ein Modul zur Berechnung der Leistungsspektrumsglättung (6010), ein Binärisierungsverarbeitungsmodul (6012), ein Cache-Modul (6014), ein Statistikmodul (6016) und ein Gewichtungskoeffizienten-Berechnungsmodul (6018) speichert, und, wenn es durch den Prozessor ausgeführt wird,
das Modul zur Berechnung der Leistungsspektrumsglättung (6010) so konfiguriert ist, dass es, bevor die Glättungsverarbeitungseinheit die Glättungsverarbeitung an dem Ergebnis der Kreuzkorrelationsoperation durchführt, ein Leistungsspektrum des aktuellen Rahmen-Referenzsignals berechnet und für jede Frequenz einen Glättungswert berechnet;
das Binärisierungsverarbeitungsmodul (6012) so konfiguriert ist, dass es eine Binärisierungsverarbeitung des Leistungsspektrums und des Glättungswertes durchführt, um ein erstes Binärisierungsarray zu erhalten;
das Cache-Modul (6014) so konfiguriert ist, dass es Binärisierungsdaten von n Rahmen vor dem aktuellen Rahmen zwischenspeichert, um ein Zielarray zu erhalten, wobei n eine positive ganze Zahl ist;
das Statistikmodul (6016) so konfiguriert ist, dass es eine Menge von aus Einsen bestehenden Binärzahlen in dem Zielarray zählt;
das Gewichtungskoeffizienten-Berechnungsmodul (6018) so konfiguriert ist, dass es, der Menge an Einsen entsprechend, einen Gewichtungskoeffizienten berechnet; und
die Glättungsverarbeitungseinheit (6060) speziell konfiguriert ist, um eine gewichtete Glättungsverarbeitung auf dem Ergebnis der Kreuzkorrelationsoperation entsprechend dem Gewichtungskoeffizienten durchzuführen.

**8.** Vorrichtung nach Anspruch 6, wobei bei der Ausführung durch den Prozessor das Kreuzkorrelationsoperationsmodul (604) speziell so konfiguriert ist, um:
durch Berechnung gemäß der folgenden Formel einen differentiellen Ergebniswert von n vorangegangenen Rahmen und dem aktuellen Rahmen-Sammelsignal zu erhalten:

$$\mathrm{CxorR}(i) = \sum_{k \subseteq [m1-m2]} \mathrm{Capb}(k)\ \mathrm{Xor}\ \mathrm{Refbbuf}(i)(k) / \mathrm{size}(k),$$

wobei i von 0 bis n-1 geht; m1=INT(M*500)/fs*2 , m2=INT(M*1200)/fs*2; fs ein Abtastfrequenzwert ist, M die Hälfte einer Menge der Fast Fourier-Transformation FFT ist; k die Frequenzpositionsinformation einer Signal-Rausch-Verhältnis-Frequenz ist, die größer ist als der erste voreingestellte Schwellenwert und in dem Signal-Rausch-Verhältnis jeder Frequenz des aktuellen Rahmen-Sammelsignals ist; Refbbuf(i)(k) das erste Zielarray ist; und Capb(k) ein zweites Binärisierungsarray, das durch Ausführen der Binärisierungsverarbeitung gemäß dem Leistungsspektrum des aktuellen Rahmen-Sammelsignals und dem Glättungswert jeder Frequenz erhalten wird.

**9.** Nichtflüchtiges Computerspeichermedium, wobei das nichtflüchtige Computerspeichermedium ein Computerprogramm speichert und das Computerprogramm so konfiguriert ist, dass es das Verfahren gemäß einem der Ansprüche 1 bis 4 durchführt.

**Revendications**

**1.** Procédé de suivi de retard d'écho, comprenant les étapes suivantes :

obtenir (S400, S500) un signal de référence de trame en cours et un signal de collecte de trame en cours ;
identifier (S402) des informations de fréquence de rapport signal sur bruit cible dans le signal de collecte de trame en cours, ce qui comprend : le calcul (S512) d'un spectre de puissance du signal de collecte de trame en cours et le calcul (S512) d'un niveau de bruit de chaque fréquence ; le calcul (S518) d'un rapport signal sur bruit de chaque fréquence en fonction du spectre de puissance et du niveau de bruit ; et l'obtention (S520) d'informations de quantité et de position de fréquence de fréquences ayant un rapport signal sur bruit correspondant supérieur à un premier seuil prédéfini ;
analyser (S522) si un pourcentage de la quantité dans une quantité totale de fréquences du signal de collecte de trame en cours est supérieur à un deuxième seuil prédéfini ; et, en réponse à la détermination que ledit pourcentage est supérieur au deuxième seuil prédéfini, déterminer que le signal de collecte de trame en cours est un signal de trame valide,
effectuer (S404, S524) une opération de corrélation croisée du signal de référence de trame en cours et du signal de collecte de trame en cours sur une partie du signal correspondant à la fréquence de rapport signal sur bruit cible ; et
obtenir (S406) une valeur de retard d'écho en fonction du résultat de l'opération de corrélation croisée.

**2.** Procédé selon la revendication 1, dans lequel l'obtention (S406) d'une valeur de retard d'écho selon un résultat de l'opération de corrélation croisée comprend les étapes suivantes :

exécuter un traitement de lissage sur un résultat de l'opération de corrélation croisée pour obtenir une valeur de traitement de lissage ; et
sélectionner (S528) une valeur de retard d'écho à partir de la valeur de traitement de lissage.

**3.** Procédé selon la revendication 2, dans lequel, avant d'exécuter le traitement de lissage sur un résultat de l'opération de corrélation croisée, le procédé comprend en outre les étapes suivantes :

calculer (S502) un spectre de puissance du signal de référence de trame en cours, et calculer une valeur de lissage de chaque fréquence ;
exécuter (S504) un traitement de binarisation sur le spectre de puissance et la valeur de lissage, pour obtenir un premier tableau de binarisation ;
placer en cache (S506) des données de binarisation de n trames avant la trame en cours afin d'obtenir un tableau cible, n étant un entier positif ;
compter (S508) une quantité de chiffres binaires contenus dans le tableau cible et comprenant 1 ;
calculer (S510) un coefficient de pondération en fonction de la quantité comprenant 1 ; et
l'exécution du traitement de lissage sur un résultat de l'opération de corrélation croisée comprend d'exécuter (S526) un traitement de lissage pondéré sur le résultat de l'opération de corrélation croisée en fonction du coefficient de pondération.

**4.** Procédé selon la revendication 2, dans lequel l'exécution (S404) d'une opération de corrélation croisée du signal de référence de trame en cours et du signal de collecte de trame en cours sur une partie du signal correspondant à la fréquence de rapport signal sur bruit cible comprend l'étape suivante :
obtenir, au moyen d'un calcul selon la formule suivante, une valeur de résultat différentiel de n trames historiques et du signal de collecte de trame en cours :

$$CxorR(i) = \sum_{k \subseteq [m1-m2]} Capb(k)\ Xor\ Refbbuf(i)(k)/size(k)$$

où i est compris entre 0 et n-1 ; m1 = INT(M*500)/fs*2, m2 = INT(M*1200)/fs*2 ; fs est une valeur de fréquence d'échantillonnage, M est la moitié d'une quantité de transformées de Fourier rapides FFT ; k est l'information de position de fréquence d'une fréquence de rapport signal sur bruit supérieure au premier seuil prédéfini et dans le rapport signal sur bruit de chaque fréquence du signal de collecte de trame en cours ; Refbbuf(i)(k) est le premier tableau cible ; et Capb(k) est un second tableau de binarisation obtenu en exécutant le traitement de binarisation en fonction du spectre de puissance du signal de collecte de trame en cours et de la valeur de lissage de chaque fréquence.

**5.** Appareil de suivi de retard d'écho, comprenant au moins un processeur et une mémoire, dans lequel la mémoire stocke un module d'obtention (600), un module d'identification (602), un module opérationnel de corrélation croisée (604) et un module d'obtention de valeur de retard (606) et, lorsqu'il est exécuté par le processeur,
le module d'obtention (600) est configuré pour obtenir un signal de référence de trame en cours et un signal de collecte de trame en cours ;
le module d'identification (602) est configuré pour identifier des informations de fréquence de rapport signal sur bruit cible dans le signal de collecte de trame en cours, où le module d'identification comprend une première unité de calcul, une deuxième unité de calcul et une unité d'obtention de quantité et, lorsqu'elle est exécutée par le processeur,
la première unité de calcul (6020) est configurée pour calculer un spectre de puissance du signal de collecte de trame en cours et calculer un niveau de bruit de chaque fréquence ;
la deuxième unité de calcul (6022) est configurée pour calculer un rapport signal sur bruit de chaque fréquence en fonction du spectre de puissance et du niveau de bruit ; et
l'unité d'obtention de quantité (6024) est configurée pour obtenir une quantité et des informations de position de fréquence de fréquences ayant un rapport signal sur bruit correspondant supérieur à un premier seuil prédéfini ;
où la mémoire stocke en outre un module d'analyse et, lorsqu'il est exécuté par le processeur :

le module d'analyse (608) est configuré pour : après que le module d'identification a identifié les informations de fréquence de rapport signal sur bruit cible dans le signal de collecte de trame en cours, analyser si un pourcentage de la quantité dans une quantité totale de fréquences du signal de collecte de trame en cours est supérieur à un deuxième seuil prédéfini ; et
en réponse à la détermination que ledit pourcentage est supérieur au deuxième seuil prédéfini, déterminer que le signal de collecte de trame en cours est un signal de trame valide ; et
le module opérationnel de corrélation croisée est configuré pour : lorsqu'il est déterminé que le signal de collecte de trame en cours est un signal de trame valide, exécuter une opération de corrélation croisée du signal de référence de trame en cours et du signal de collecte de trame en cours sur une partie du signal correspondant à la fréquence de rapport signal sur bruit cible ; et le module d'obtention de valeur de retard est configuré pour obtenir une valeur de retard d'écho en fonction du résultat de l'opération de corrélation croisée.

**6.** Appareil selon la revendication 5, dans lequel le module d'obtention de valeur de retard (606) comprend une unité de traitement de lissage (6060) et une unité de sélection (6062) et, lorsqu'elles sont exécutées par le processeur,
l'unité de traitement de lissage (6060) est configurée pour exécuter un traitement de lissage sur un résultat de l'opération de corrélation croisée afin d'obtenir une valeur de traitement de lissage ; et
l'unité de sélection (6062) est configurée pour sélectionner une valeur de retard d'écho à partir de la valeur de traitement de lissage.

**7.** Appareil selon la revendication 6, dans lequel la mémoire est en outre configurée pour stocker un module de calcul de lissage de spectre de puissance (6010), un module de traitement de binarisation (6012), un module de cache (6014), un module de statistique (6016) et un module de calcul de coefficient de pondération (6018) et, lorsqu'ils sont exécutés par le processeur,
le module de calcul de lissage de spectre de puissance (6010) est configuré pour : avant que l'unité de traitement de lissage n'exécute le traitement de lissage sur le résultat de l'opération de corrélation croisée, calculer un spectre de puissance du signal de référence de trame en cours, et calculer une valeur de lissage de chaque fréquence ;
le module de traitement de binarisation (6012) est configuré pour exécuter un traitement de binarisation sur le spectre de puissance et la valeur de lissage afin d'obtenir un premier tableau de binarisation ;
le module de cache (6014) est configuré pour placer en cache des données de binarisation de n trames avant la trame en cours afin d'obtenir un tableau cible, n étant un entier positif ;
le module de statistique (6016) est configuré pour compter une quantité de chiffres binaires contenus dans le tableau cible et comprenant 1 ;
le module de calcul de coefficient de pondération (6018) est configuré pour calculer un coefficient de pondération en fonction de la quantité comprenant 1 ; et
l'unité de traitement de lissage (6060) est spécifiquement configurée pour effectuer un traitement de lissage pondéré sur le résultat de l'opération de corrélation croisée en fonction du coefficient de pondération.

**8.** Appareil selon la revendication 6, dans lequel, lorsqu'il est exécuté par le processeur, le module opérationnel de corrélation croisée (604) est spécifiquement configuré pour :
obtenir, au moyen d'un calcul selon la formule suivante, une valeur de résultat différentiel de n trames historiques et du signal de collecte de trame en cours :

$$CxorR(i) = \sum_{k \subseteq [m1-m2]} Capb(k)\ Xor\ Refbbuf(i)(k)/size(k)$$

où i est compris entre 0 et n-1 ; m1 = INT(M*500)/fs*2, m2 = INT(M*1200)/fs*2 ; fs est une valeur de fréquence d'échantillonnage, M est la moitié d'une quantité de transformées de Fourier rapides FFT ; k est l'information de position de fréquence d'une fréquence de rapport signal sur bruit supérieure au premier seuil prédéfini et dans le rapport signal sur bruit de chaque fréquence du signal de collecte de trame en cours ; Refbbuf(i)(k) est le premier tableau cible ; et Capb(k) est un second tableau de binarisation obtenu en exécutant le traitement de binarisation en fonction du spectre de puissance du signal de collecte de trame en cours et de la valeur de lissage de chaque fréquence.

**9.** Support de stockage informatique non volatil, où le support de stockage informatique non volatil stocke un programme informatique qui, lorsqu'il est exécuté par un ordinateur, amène l'ordinateur à exécuter le procédé selon l'une quelconque des revendications 1 à 4.

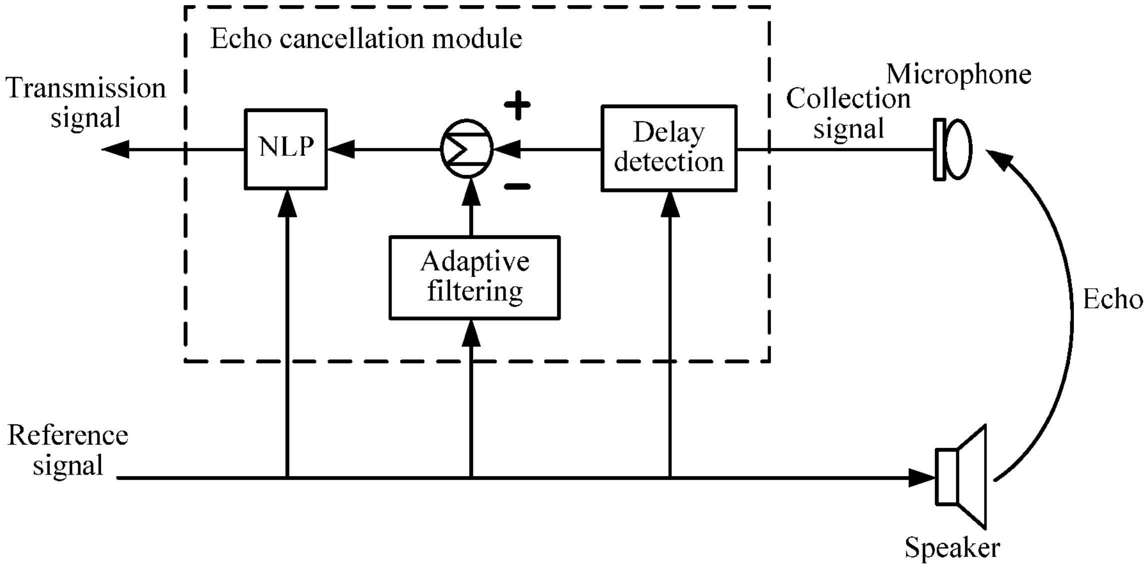
Echo cancellation module
Transmission signal
NLP
+
−
Delay detection
Collection signal
Microphone
Adaptive filtering
Echo
Reference signal
Speaker

FIG. 1

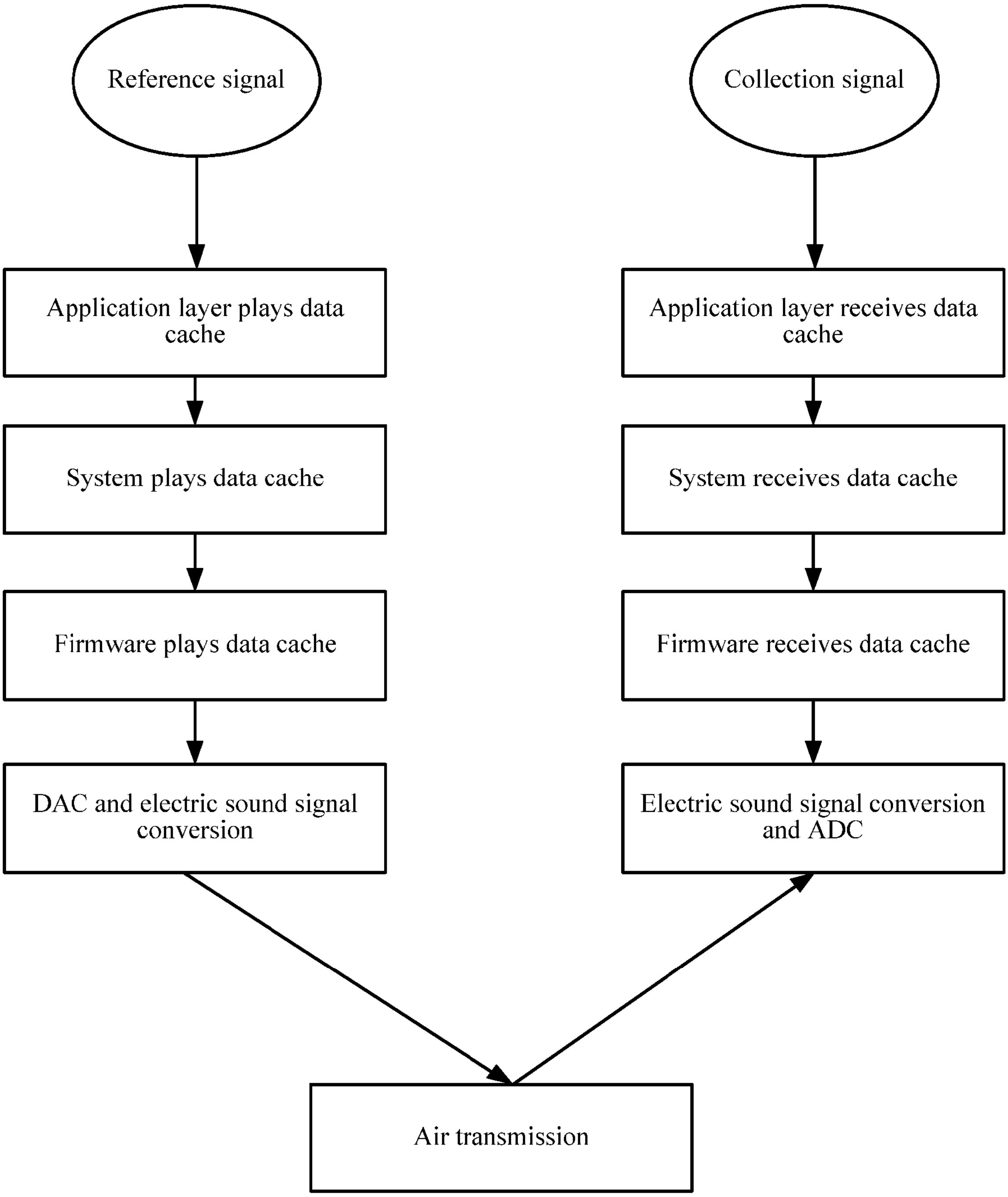
Reference signal
Collection signal
Application layer plays data cache
Application layer receives data cache
System plays data cache
System receives data cache
Firmware plays data cache
Firmware receives data cache
DAC and electric sound signal conversion
Electric sound signal conversion and ADC
Air transmission

FIG. 2

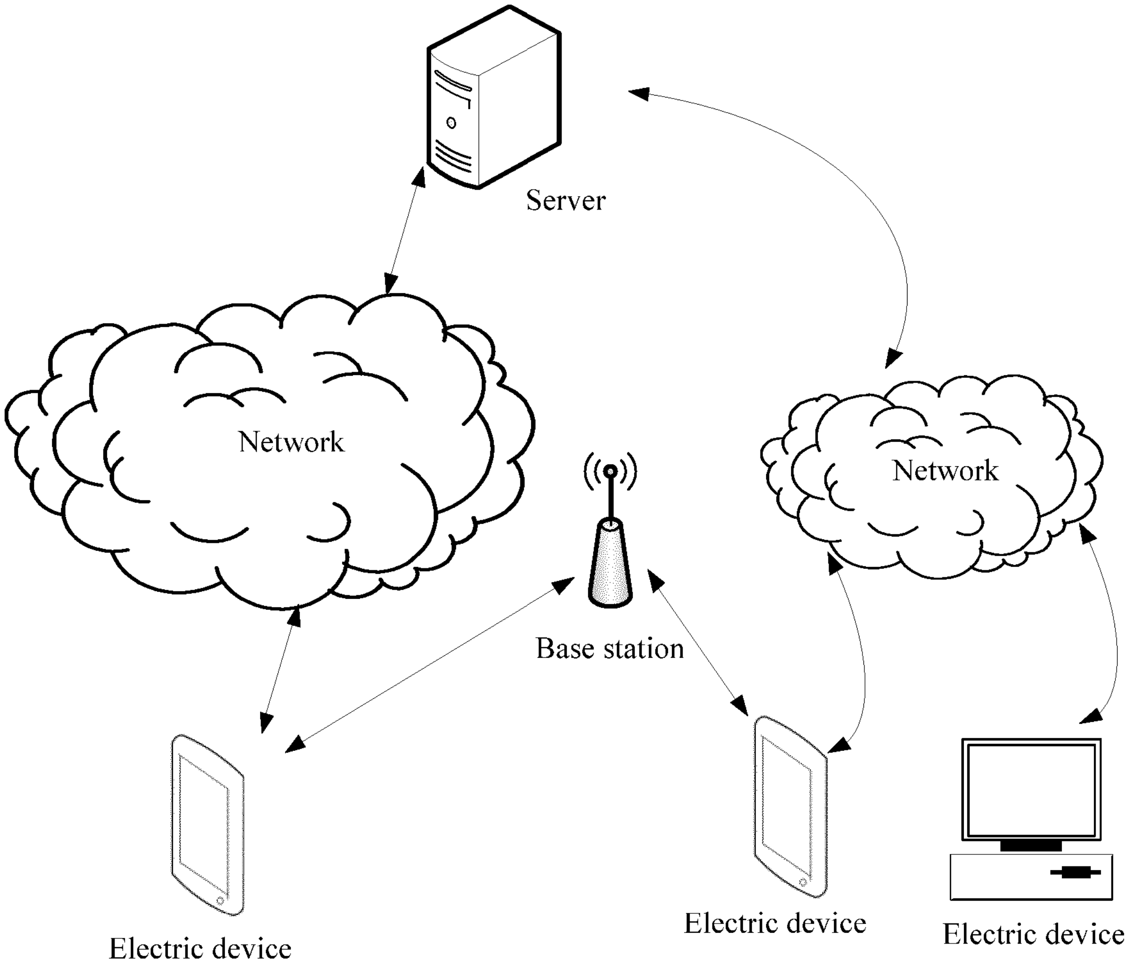
Server
Network
Network
Base station
Electric device
Electric device
Electric device

FIG. 3

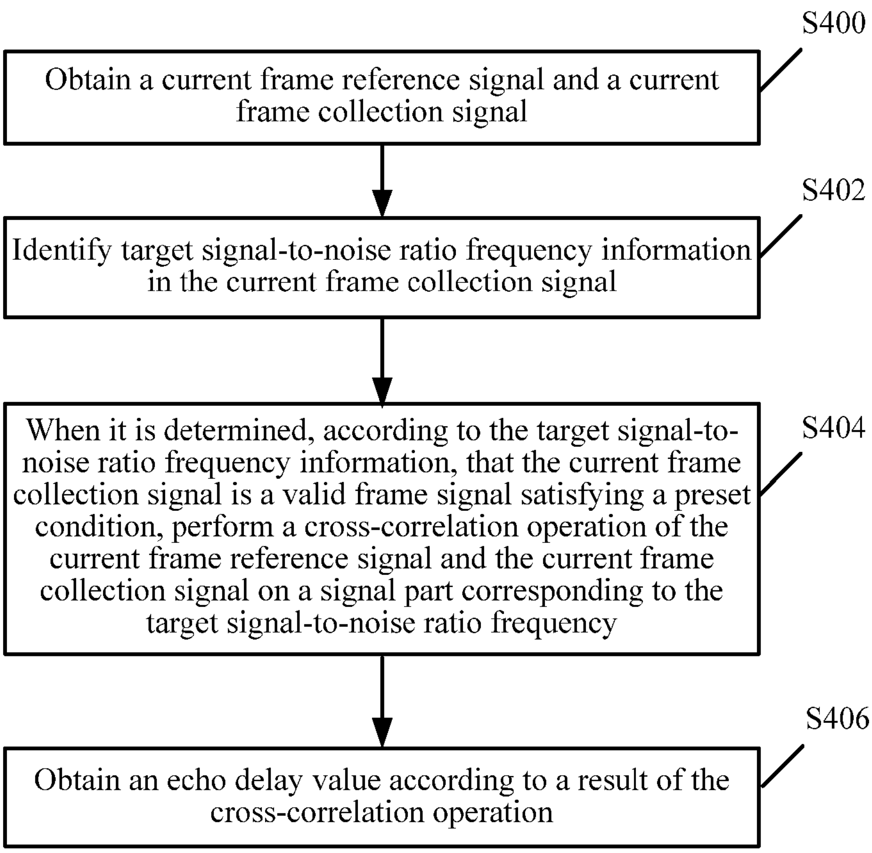
S400
Obtain a current frame reference signal and a current frame collection signal
S402
Identify target signal-to-noise ratio frequency information in the current frame collection signal
S404
When it is determined, according to the target signal-to-noise ratio frequency information, that the current frame collection signal is a valid frame signal satisfying a preset condition, perform a cross-correlation operation of the current frame reference signal and the current frame collection signal on a signal part corresponding to the target signal-to-noise ratio frequency
S406
Obtain an echo delay value according to a result of the cross-correlation operation

FIG. 4

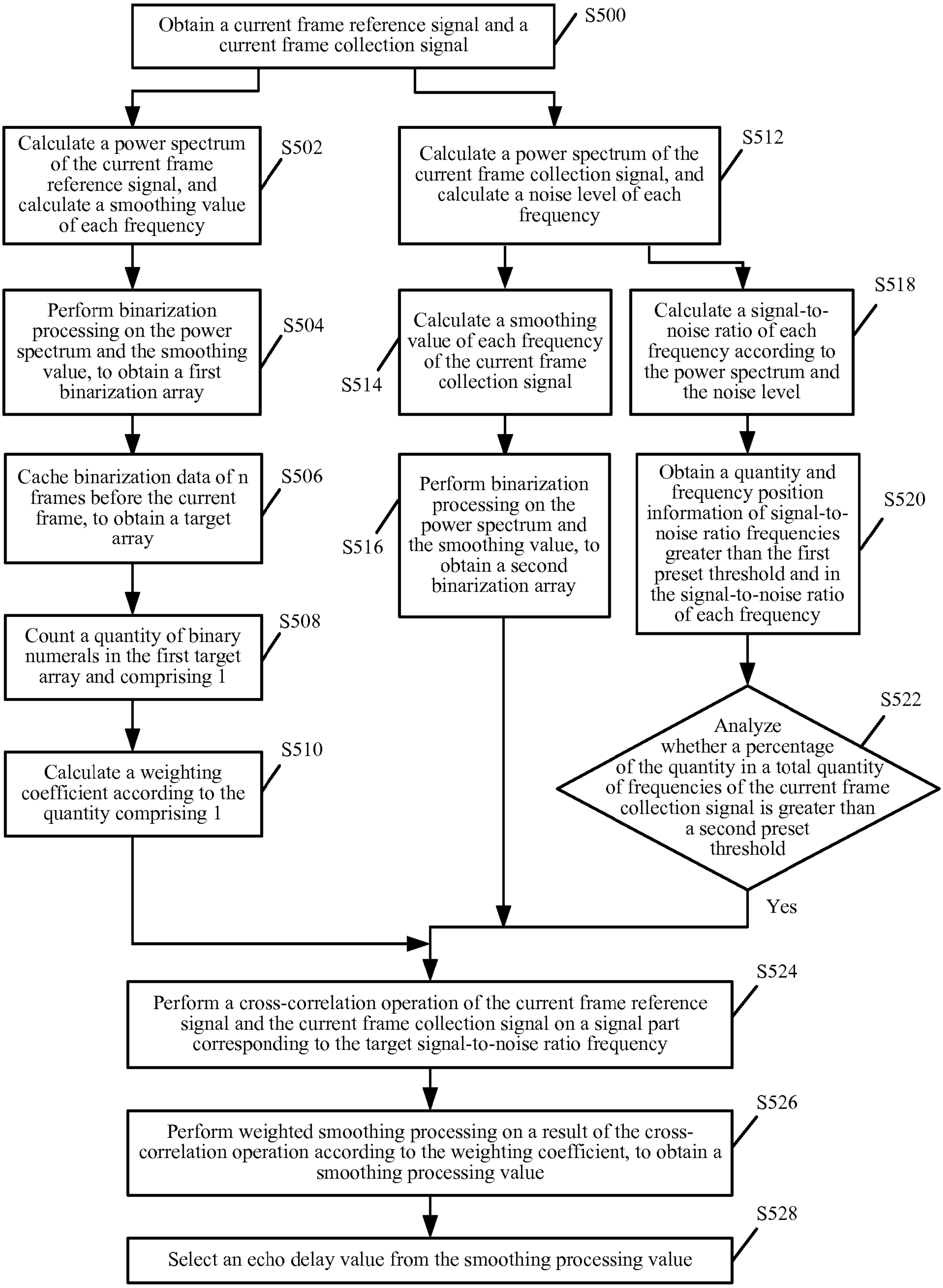
Obtain a current frame reference signal and a current frame collection signal
S500
Calculate a power spectrum of the current frame reference signal, and calculate a smoothing value of each frequency
S502
Calculate a power spectrum of the current frame collection signal, and calculate a noise level of each frequency
S512
Perform binarization processing on the power spectrum and the smoothing value, to obtain a first binarization array
S504
Calculate a smoothing value of each frequency of the current frame collection signal
S514
Calculate a signal-to-noise ratio of each frequency according to the power spectrum and the noise level
S518
Cache binarization data of n frames before the current frame, to obtain a target array
S506
Perform binarization processing on the power spectrum and the smoothing value, to obtain a second binarization array
S516
Obtain a quantity and frequency position information of signal-to-noise ratio frequencies greater than the first preset threshold and in the signal-to-noise ratio of each frequency
S520
Count a quantity of binary numerals in the first target array and comprising 1
S508
Calculate a weighting coefficient according to the quantity comprising 1
S510
Analyze whether a percentage of the quantity in a total quantity of frequencies of the current frame collection signal is greater than a second preset threshold
S522
Yes
Perform a cross-correlation operation of the current frame reference signal and the current frame collection signal on a signal part corresponding to the target signal-to-noise ratio frequency
S524
Perform weighted smoothing processing on a result of the cross-correlation operation according to the weighting coefficient, to obtain a smoothing processing value
S526
Select an echo delay value from the smoothing processing value
S528

FIG. 5

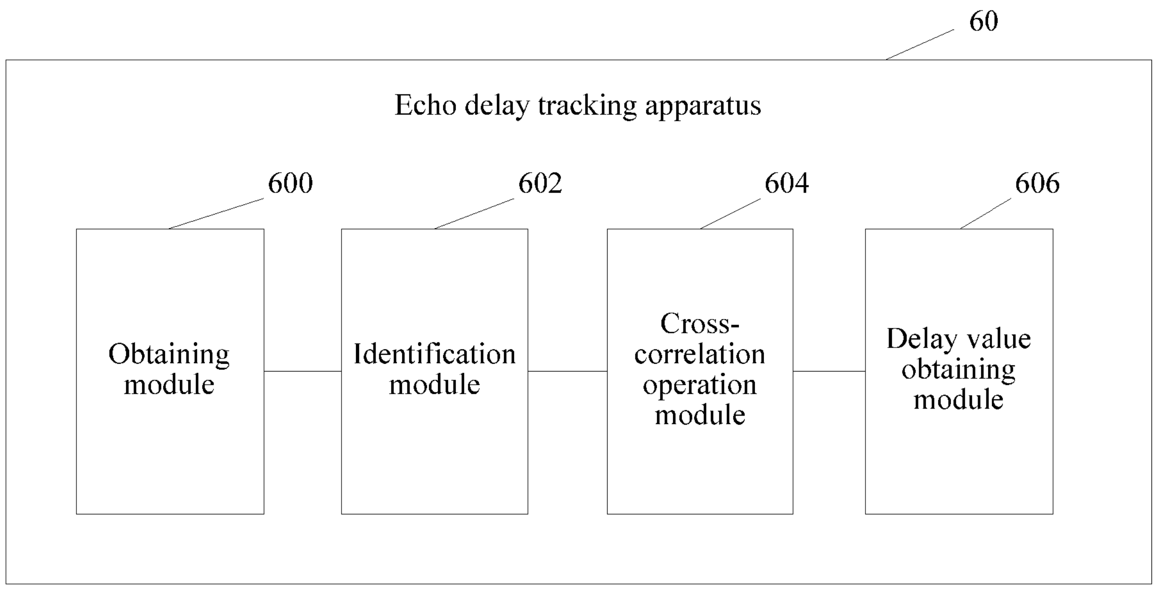
60
Echo delay tracking apparatus
600
602
604
606
Obtaining module
Identification module
Cross-correlation operation module
Delay value obtaining module

FIG. 6

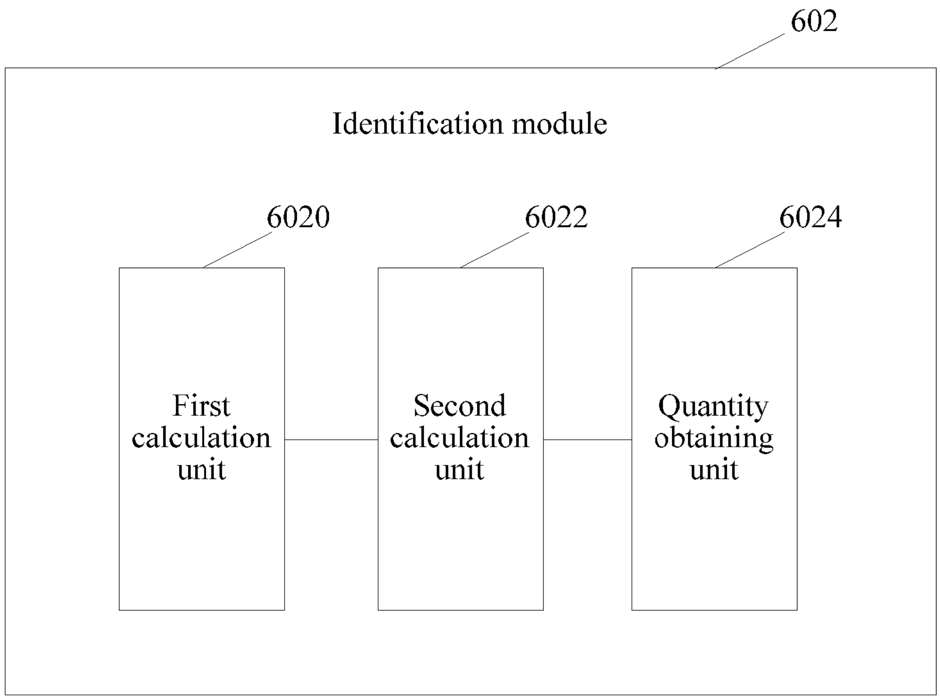
602
Identification module
6020
6022
6024
First calculation unit
Second calculation unit
Quantity obtaining unit

FIG. 7

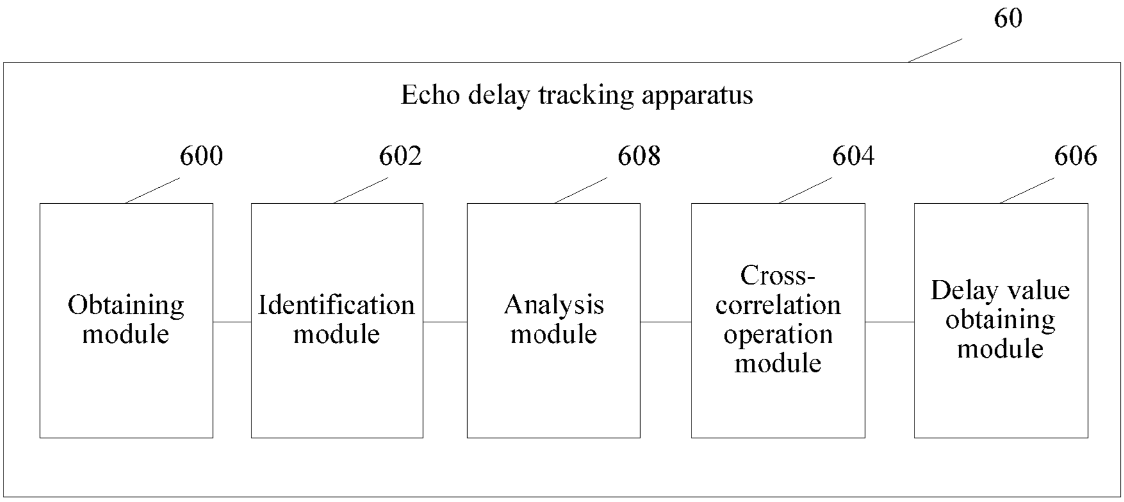
60
Echo delay tracking apparatus
600
602
608
604
606
Obtaining module
Identification module
Analysis module
Cross-correlation operation module
Delay value obtaining module

FIG. 8

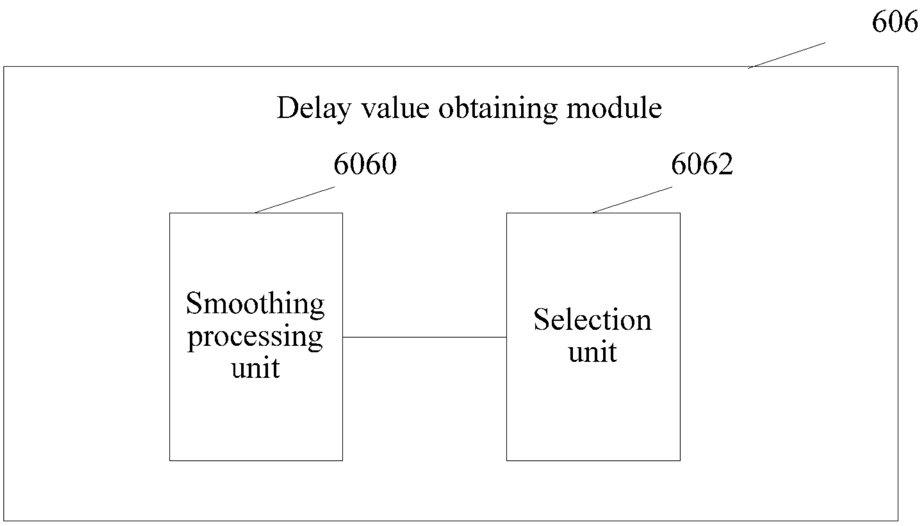
606
Delay value obtaining module
6060
6062
Smoothing processing unit
Selection unit

FIG. 9

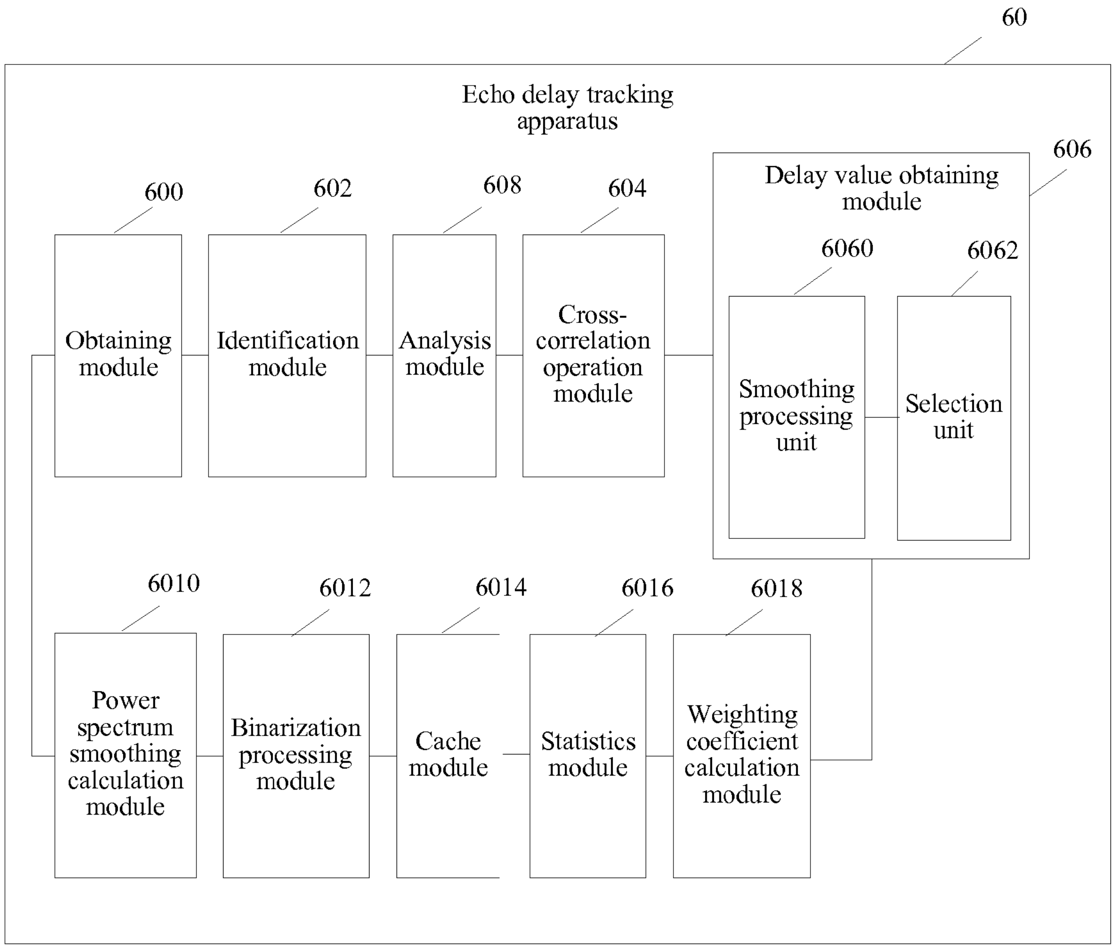
60
Echo delay tracking apparatus
600
602
608
604
606
Delay value obtaining module
6060
6062
Obtaining module
Identification module
Analysis module
Cross-correlation operation module
Smoothing processing unit
Selection unit
6010
6012
6014
6016
6018
Power spectrum smoothing calculation module
Binarization processing module
Cache module
Statistics module
Weighting coefficient calculation module

FIG. 10

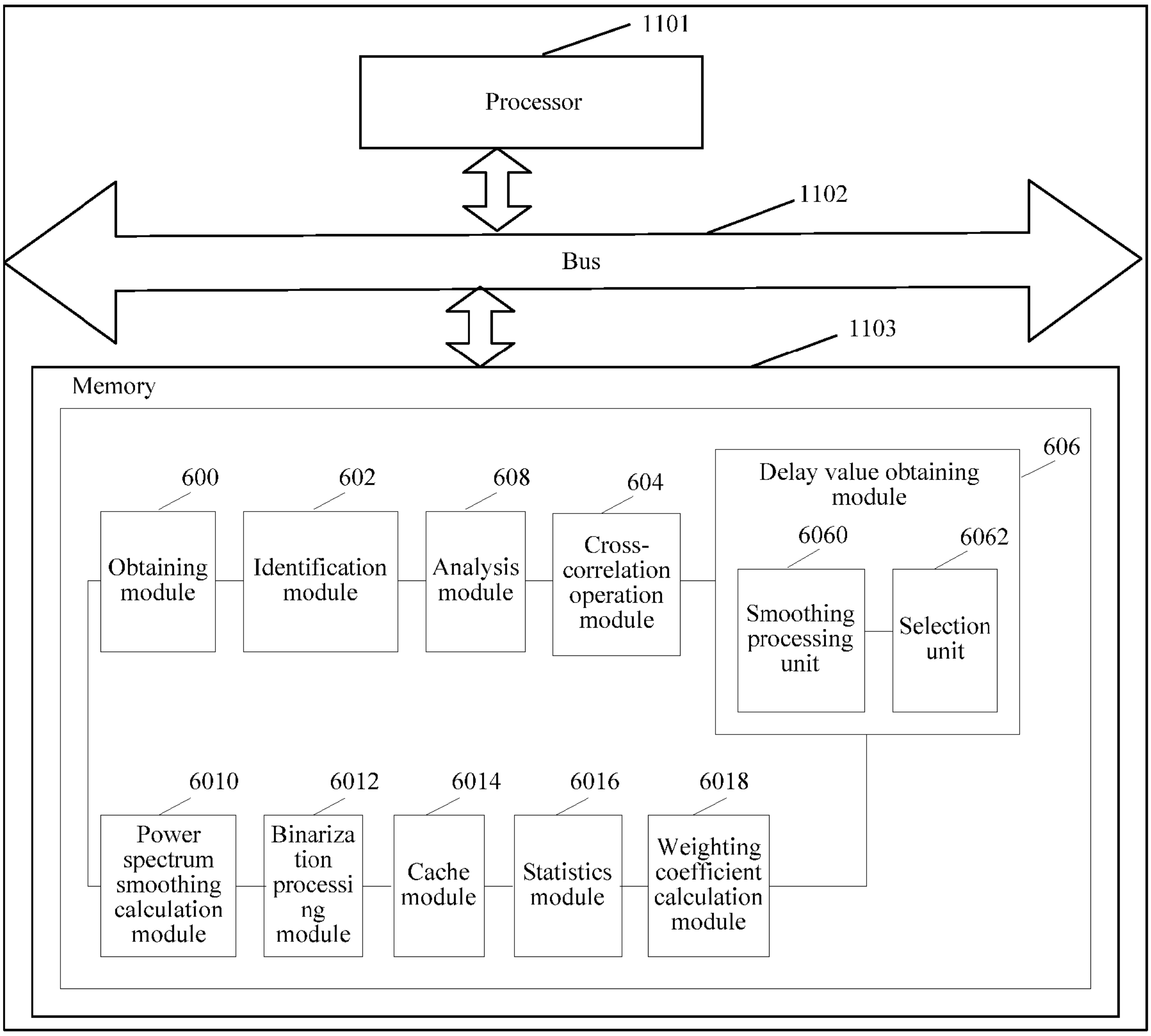
1101
Processor
1102
Bus
1103
Memory
600
602
608
604
606
Delay value obtaining module
Obtaining module
Identification module
Analysis module
Cross-correlation operation module
6060
6062
Smoothing processing unit
Selection unit
6010
6012
6014
6016
6018
Power spectrum smoothing calculation module
Binarization processing module
Cache module
Statistics module
Weighting coefficient calculation module

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160127527 A1
- US 20150078564 A1
- CN 105472191 A